# EUROPÄISCHE PATENTANMELDUNG

(11) **EP 3 070 051 A1**
(43) Veröffentlichungstag der Anmeldung: **21.09.2016**
(21) Anmeldenummer: 16160302.2
(22) Anmeldetag: 15.03.2016
(51) Int. Cl.: C01B 3/00, G21B 3/00

(54) **VERFAHREN UND VORRICHTUNG ZUM ERZEUGEN UND ZUM FUSIONIEREN VON ULTRADICHTEM WASSERSTOFF**

(30) Priorität: 16.03.2015 DE 102015103843; 03.09.2015 DE 102015114744
(71) Anmelder: Airbus DS GmbH, 82024 Taufkirchen (DE)
(72) Erfinder: Kotzias, Bernhard, 28717 Bremen (DE)
(74) Vertreter: Marschall, Stefan

(57) **Zusammenfassung**

Offenbart ist ein Verfahren zum Erzeugen und zum Fusionieren von ultradichtem Wasserstoff, bei dem molekularer Wasserstoff in zumindest einem Hohlraum hineingeleitet und katalysiert wird, wobei die Aufspaltung und nachfolgende Kondensation des molekularen Wasserstoffs an einem Katalysator des Hohlraums zu einem ultradichten Wasserstoff eingeleitet wird, der ultradichten Wasserstoffs mit Druck oder elektromagnetischer Strahlung zum Einleiten einer Fusion des ultradichten Wasserstoffs in dem zumindest einem Hohlraum beaufschlagt wird und die Reaktionswärme aus dem zumindest einem Hohlraum hinausgeleitet wird, wobei der Druck als mechanische Resonanz bzw. die elektromagnetische Strahlung als elektromagnetische Resonanz das Feld und damit den Effekt verstärkt. Weiterhin ist eine Vorrichtung zum Durchführen des Verfahrens offenbart.

## Beschreibung

Die Erfindung betrifft ein Verfahren zum Erzeugen und zum Fusionieren von ultradichtem Wasserstoff gemäß dem Patentanspruch 1, sowie eine Vorrichtung zum Durchführen des Verfahrens nach dem Oberbegriff des Patentanspruchs 6.

In vielen Bereichen wird nach alternativen Energiequellen gesucht, welche insbesondere die Probleme der Energiequellen umgehen sollen, die auf nuklearen Reaktionen oder fossilen Brennstoffen basieren. Hierbei werden regelmäßig Fusionsprozesse genannt, die das Potential haben sollen, nachhaltig, umweltschonend und zuverlässig zu sein.

Neben der heißen Fusion sind bereits verschiedene Fusionsprozesse im Bereich der kalten Fusion beschrieben worden. Hierbei mangelt es diesen oftmals an nachweisbarer Funktionalität und Effektivität. Zunehmend lässt sich eine Entwicklung auf dem Gebiet der kalten Fusion hin zur Nutzung von kondensierter Materie erkennen.

So werden beispielsweise in der EP2680271A1 ein Verfahren und eine Vorrichtung zur Erzeugung von Energie durch Kernfusionen gezeigt. Dabei wird gasförmiger Wasserstoff katalytisch zum ultradichten Wassersoff kondensiert und auf einem Träger gesammelt. Der Träger wird anschließend in eine Strahlungskammer gebracht, in der der ultradichte Wasserstoff fusionieren kann. Schwierigkeiten ergeben sich hierbei insbesondere aus der Tatsache, dass der Träger unter konstanten Randbedingungen wie beispielsweise Vakuum transportiert werden muss, damit der Wasserstoff sich nicht aus seinem kondensierten Zustand verflüchtigen kann. Die technische Umsetzung des Verfahrens auf eine industriell nutzbare Vorrichtung kann somit sehr umständlich sein.

Zusätzlich zu der EP2680271A1 kann auch die EP1551032A1 genannt werden. Diese beschreibt ein Verfahren zur Erzeugung von Wärme basierend auf Wasserstoffkondensaten. Es kann insbesondere Wasserstoffgas an Nanopartikeln kondensiert werden. Hierfür muss das Wasserstoffgas mit hohem Druck beaufschlagt werden. Durch Ultraschallwellen können die kondensierten Wasserstoffatome miteinander fusionieren und somit Wärme erzeugen. Problematisch ist hierbei die Verwendung der Nanopartikel, da aufgrund deren Reaktivität die Auswirkungen auf die Umwelt bislang nur wenig geklärt sind.

Aus der WO2009/125444A1 sind weiterhin ein Verfahren und eine Vorrichtung zum Durchführen von exothermen Reaktionen zwischen Nickel und Wasserstoff bekannt. Es wird Wasserstoffgas unter Druck in ein mit Nickelpulver gefülltes Rohr eingebracht. Unter Einwirkung von Hitze kann das System zum Fusionieren gebracht werden. Als Problematisch stellt sich bei dieser Patentschrift insbesondere die Wiederverwendung bzw. Entsorgung von Nickel als giftiges Schwermetall dar.

Für technische Anwendungen unter mechanisch und thermisch belasteten Umgebungsbedingungen hat sich herausgestellt, dass metallische oder keramische Schäume gerade für das Material eines Fusionsreaktors erheblichen Anforderungen hinsichtlich der Temperaturbeständigkeit unterliegen. Möchte man eine Stabilität oberhalb einer Temperatur von 2000°C erreichen, so bleiben nur noch Materialien wie beispielsweise Zirkoniumoxid, Siliziumcarbid, Nitrid-keramik, Kohlenstoffstrukturen oder dergleichen übrig. Diese sind dabei entweder unter Sauerstoffatmosphäre nicht derart temperaturbeständig, oder sind sehr spröde und somit mechanisch instabil. Zirkonium-Oxidkeramik beispielsweise ist ebenfalls in seiner reinen Form wenig stabil und besonders in der Anwendung vom Zerfall betroffen. Darüber hinaus ist es auch nicht geeignet in einer mechanisch stark beanspruchten Umgebung mit vielen Vibrationen lange zu "überleben". Schon der Transport birgt erheblich Risiken hinsichtlich der mechanischen Stabilität des Materials.

Weiterhin muss ein kontrollierter Zustand vorliegen. Es darf keine Schmelze des Trägermaterials auftreten. Der Katalysator darf keine Änderung der Struktur erfahren und Hitzeeinwirkung aus der Fusion erfahren, oder muss in seine alte Struktur zurückfallen nach dem Schmelzvorgang. Damit kann ein Temperaturbereich für einen praktikablen Fusions-Prozess eingegrenzt werden.

Weiterhin stellt die Prozessführung einer Fusion ein Problem von Reaktionsverzögerungen dar. Läuft der Prozess zu langsam oder zu schwach ist dies ungünstig für den Wirkungsgrad. Eine gewisse Reaktionsfreudigkeit ist somit erforderlich, damit der Prozess schnell genug startet bei Bedarf an Energie.

Darüber hinaus können radioaktive Reaktionskanäle auftreten oder Neutronen auftreten. Diese sind zu minimieren, um eine praktikable Anwendung des Systems zu fahren. Schließlich soll die erzeugte Energie als Wärme enden, und weniger als Strahlung. Ein Modell der Reaktionskanäle ist deshalb unerlässlich.

Aufgabe der Erfindung ist es ein Verfahren zu schaffen, welches die genannten Nachteile beseitigt und ein umweltschonendes und effizientes Erzeugen und Fusionieren von ultradichtem Wasserstoff ermöglicht. Unter umweltschonend ist insbesondere die die Vermeidung der Entstehung radioaktiver Isotopen und die Verwendung von giftigen chemischen Substanzen gemeint. Weiterhin ist es Aufgabe der Erfindung eine Vorrichtung zum Durchführen des erfindungsgemäßen Verfahrens zu schaffen.

Diese Aufgabe wird durch ein Verfahren zum Erzeugen und zum Fusionieren von ultradichtem Wasserstoff mit den Merkmalen des Patentanspruchs 1 und durch eine Vorrichtung mit den Merkmalen des Patentanspruchs 6 gelöst.

Bei einem Verfahren zum Erzeugen und zum Fusionieren von ultradichtem Wasserstoff wird molekularer Wasserstoff bei niedrigem Druck in zumindest einem Hohlraum hineingeleitet und katalysiert. Erfindungsgemäß wird bei dem eingeleiteten molekularen Wasserstoff eine Kondensation an einem Katalysator des Hohlraums zu einem ultradichten Wasserstoff eingeleitet. Der ultradichte Wasserstoff kann erfindungsgemäß gezündet werden, sodass der ultradichte Wasserstoff in dem zumindest einem Hohlraum fusioniert. Die durch die Fusionsprozesse entstehende Wärmenergie wird dann aus dem zumindest einem Hohlraum hinausgeleitet.

Hierbei kann der molekulare Wasserstoff auch nach vorhergehendem Evakuieren unter Unterdruck in den zumindest einen Hohlraum hineingeleitet werden. Vorzugsweise begünstigt neben dem Katalysator auch das Material und die Wandflächenstruktur des Hohlraums die Kondensation des molekularen Wasserstoffs zum ultradichten Wasserstoff. Das Material des Hohlraums wird im Folgenden auch als Trägermaterial bezeichnet. Dieses Trägermaterial kann mit einem Katalysator vermischt sein oder mit einem Katalysator beschichtet sein. Während der katalytischen Kondensation wird vorzugsweise der molekulare Wasserstoff in atomaren Wasserstoff aufgespalten. Unter Wasserstoff werden hierbei sämtliche Wasserstoffisotope verstanden, sowie auch elektronisch wasserstoffähnliche Atome, wie Kalium, Natrium oder dergleichen. Darüber hinaus bilden die gespaltene Wasserstoffmoleküle unter den speziellen Systemparametern eine Ultradichte Form von Materie.

Da der kondensierte ultradichte Wasserstoff eine hohe Dichte aufweist und die einzelnen Wasserstoffatome nahe beieinander liegen, ist es mit unterschiedlichen Methoden und insbesondere mit wenig Energie möglich eine Fusion zu initiieren.

Die resultierende Reaktionswärme aus der Fusion wird aus dem zumindest einem Hohlraum hinausgeleitet und kann für verschiedene Zwecke verwendet werden. Vorzugsweise wird die Reaktionswärme entweder für weitere Initiierungen von Fusionsprozessen verwendet oder nutzbar gemacht. Beispielsweise kann die Wärme zur Erzeugung von mechanischer und/oder elektrischer Energie genutzt werden. Weitere mögliche Verwendungsmöglichkeiten der Reaktionswärme können beispielsweise in der Wasseraufbereitung oder in chemischen Umwandlungsprozessen wie beispielsweise der Elektrolyse angesiedelt sein.

Bei einem vorteilhaften Ausführungsbeispiel des erfindungsgemäßen Verfahrens wird der molekulare Wasserstoff nach dem Kondensieren zum ultradichten Wasserstoff gebunden. Der ultradichte Wasserstoff kann sich vorzugsweise sowohl im Katalysator als auch im Trägermaterial des zumindest einen Hohlraums einlagern. Der ultradichte Wasserstoff ist stabil und liegt in verschiedenen Spin-Zuständen vor. Dabei besitzen die Wasserstoffkerne einen quantenmechanischen Grundzustand, der in einer spinabhängigen Feinstruktur auffächert und sich durch die kurze Abstände der Wasserstoffkerne (Protonen) zueinander auszeichnet. Die Abstände können dabei weniger als 2.5pm und sogar weniger als 0.6pm betragen. Somit können die Wasserstoffkerne auch ohne größere Energiezufuhr zur Fusion gebracht werden. Teilweise liegen die Strukturen der kondensierten Wasserstoffkerne als supraleitendes und superfluides Kondensat mit größeren Abständen vor. Die Verhältnisse der verschiedenen Strukturen zueinander sind temperaturabhängig. Der supraleitende und superfluide Zustand hat eine Übergangstemperatur in den normalleitenden und damit klassischen Zustand von oberhalb 300°C oder auch 400°C - bei anderen Materialien auch weniger. Durch die Einlagerung des ultradichten Wasserstoffs kann dieser zu einer beliebigen Zeit später im selben Hohlraum fusioniert werden, sodass Ladevorgänge für spätere Nutzungen der Wärmeenergie möglich sind.

Gemäß einem weiteren Ausführungsbeispiel des erfindungsgemäßen Verfahrens kann die Fusion elektrisch, elektromagnetisch oder mechanisch, sowie thermisch eingeleitet werden. Somit steht eine Vielzahl an möglichen technischen Umsetzungen zur Verfügung, das Verfahren durchzuführen. Beispielsweise kann die Fusion durch Laserstrahlung, elektrisches Plasma oder Piezoelemente bzw. Druck initiiert werden.

Bei einem weiteren bevorzugten Ausführungsbeispiel des erfindungsgemäßen Verfahrens wird die aus dem zumindest einem Hohlraum hinausgeleitete Reaktionswärme zum weiteren Initiieren von Fusionen genutzt. Hierdurch reicht bereits eine kleine lokale Initierungsenergie aus, um eine Fusion in mehreren Hohlräumen zu beginnen.

Gemäß einem bevorzugten Ausführungsbeispiel wird die aus dem zumindest einen Hohlraum hinausgeleitete Reaktionswärme in mechanische, elektrische oder chemische Energie umgewandelt.

Hierdurch kann die Reaktionswärme in Strom, mechanische Arbeit oder in chemische Arbeit wie beispielsweise Elektrolyse gewandelt werden.

Eine Vorrichtung zum Durchführen des erfindungsgemäßen Verfahrens zum Erzeugen und zum Fusionieren von ultradichtem Wasserstoff weist zumindest einen Hohlraum zum Aufnehmen eines molekularen Wasserstoffs und einen Katalysator zum Katalysieren des molekularen Wasserstoffs und eine Initiierungsquelle zum Initiieren einer Fusion auf. Erfindungsgemäß ist der zumindest eine Hohlraum eine zumindest eine Pore oder Fehlstelle eines metallischen Schaums, die an ihren Oberflächen zumindest bereichsweise von dem Katalysator umgeben ist und eine zumindest teilweise Durchlässigkeit für elektromagnetischen Wellen aufweist. Sobald der Ultradichte Wasserstoff kondensiert und die supraleitende Phase aufweist, werden die Wände weiterhin elektrisch supraleitend. Es entsteht ein Resonator mit hoher Güte. Es entsteht ein Spiegelsystem mit halbdurchlässigen Wänden, ähnlich einer Fabry Perot Kavität.

Hierbei kann die Materialanodnung ein gängiges Trägermaterial aufweisen, welches mechanisch und thermisch bis über 2000°C stabil ist und vorzugsweise nicht giftig ist und ebenso keine Nano-Strukturen aufweist, sodass die Herstellung nicht erschwert wird.

Dies kann beispielsweise durch offenporige mikroporöse oxidische Materialien realisiert werden. Das Trägermaterial kann beispielsweise durch Sintern hergestellt werden. Es muss nicht zwangsweise von sich aus aktiv sein und somit ultradichten Wasserstoff kondensieren. Die Eigenschaft zur Bildung von ultradichten Wasserstoff kann beispielsweise nachträglich durch Katalysatoren eingebracht werden. Der Katalysator kann beispielsweise in die gesinterte Struktur des Trägermaterials positiv geladene Fehlstellen einbringen oder als Beschichtung auf das Trägermaterial appliziert werden. Somit kann gleichzeitig das Trägermaterial aktiviert und stabilisiert werden, wobei die Fähigkeit kondensierten Wasserstoff zu speichern hiervon unberührt bleibt.

Das aktive Trägermaterial bildet hier den ultradichten Wasserstoff in zwei Schritten. Zuerst wird molekularer Wasserstoff in seine Atome gepalten und anschließend in das Materialgitter und die Hohlräume und Fehlstellen des Trägermaterials und zwischen Trägermaterial und Katalysator und zwischen Katalysator und Katalysator eingebunden, wodurch die Wasserstoffatome zum ultradichten Wasserstoff kondensieren.

Ein Beispiel für ein oxidisches Trägermaterial ist Zirkonium-Dioxid, welches insbesondere in einer mikroporösen Form mechanisch stabilisiert werden muss. Die Stabilisierung von Zirkonium-Dioxid kann beispielsweise durch ein Einbringen von Erdalkalimetallen oder Yttrium oder anderen Atomen beziehungsweise Molekülen mit einem oder zwei freien Valenzelektronen erfolgen.

Hierdurch lässt sich die Vorrichtung besonders einfach technisch realisieren, indem ein Metallschaum oder ein Keramikschaum erzeugt und anschließend ein entsprechender Katalysator appliziert wird. Die Vorrichtung kann darüber hinaus integral mit weiteren Vorrichtungen wie beispielsweise zur Erzeugung von mechanischer oder elektrischer Energie verbunden sein, da Metall auch bereichsweise aufgeschäumt werden kann. Vorzugsweise ist der Metallschaum oder der Keramikschaum ofenporig ausgeführt, sodass molekularer Wasserstoff effektiv hineingelangen kann. Die Schaumstruktur des Metallschaums oder des Keramikschaums erhöht die spezifische Oberfläche der Vorrichtung und maximiert damit das Volumen, welches dem Kondensat aus ultradichtem Wasserstoff zur Verfügung steht.

Bei einem bevorzugten Ausführungsbeispiel der erfindungsgemäßen Vorrichtung weist der Katalysator die Form einer Katalysatorbeschichtung auf. Hierdurch kann der Katalysator besonders einfach auf den Metallschaum oder den Keramikschaum angebracht werden. Beispielsweise kann dies durch Tauchen in eine Lösung, galvanisch oder durch Bedampfen ausgeführt werden. Weiterhin ist auch eine Plasmabeschichtung oder ein Einbringen mittels einer Suspensionslösung möglich. Der Metallschaum oder der Keramikschaum dient als Trägermaterial für die Katalysatorbeschichtung. Die Katalysatorbeschichtung dient als Kondensationsbeschleuniger. Sie sorgt somit dafür, dass Materie wesentlich schneller zu einem Ultradichten Kondensat kondensieren kann, als in einem unbeschichteten Material, welches die Fähigkeit mitbringt Ultradichten Wasserstoff zu kondensieren.

In einem weiteren Ausführungsbeispiel wird der Katalysator mit einem 1-20 massenprozentigen Anteil eines weiteren Metalls gemischt, welches keine katalytische Fähigkeit zur Bildung von ultradichten Wasserstoff aufweist, wie z.B. Kupfer. Damit wird eine HydridBildung bei höheren Drücken unterhalb von 1bar vermieden und die Prozessparameter vereinfacht, Unterdrücke unterhalb eines 1 tausendstel bar sind einfacher zu bilden sind als Unterdrücke unterhalb weniger eintausendstel millibar.

Gemäß einem Ausführungsbeispiel der erfindungsgemäßen Vorrichtung weist die Katalysatorbeschichtung eine körnige und regelmäßige Struktur auf. Vorzugsweise ist die ein Titan-Oxid. Somit wird eine Vielzahl an Fehlstellen und Kavitäten auf der Oberfläche gebildet. Weiterhin wird die Bildung von elektronischen Oberflächenstrukturen (Plasmonen) gefördert und deren Ankopplung an das elektromagnetische Feld im Hohlraum verbessert. Der Katalysator kann beim Sintern des Trägermaterials in den beim Sintern entstehenden Keramikschaum eingebracht werden. Dies wirkt sich stabilisierend auf die Keramik aus, so dass erhöhte mechanische Kräfte aufgenommen werden können. Dies kann sich positiv auf die Fähigkeit der Speicherung von Ultradichten Wasserstoff auswirken. Die somit vorhandenen Casimir- und Kapillarkräfte wirken sich positiv auf die Kondensation des Wasserstoffs aus. Die spezifische Oberfläche kann hierdurch zusätzlich zu der Schaumstruktur vergrößert werden.

Die Größe der Hohlräume liegt im Bereich von 1-40 µm Durchmesser und damit im Bereich des Maximums der planckschen Strahlungslänge, wenn die Fusion Energie abgegeben hat und das Trägermaterial auf eine Temperatur von 400 - 2000 Grad C aufgeheizt hat. Der Fusionsprozess wird damit verstärkt.

Der Fusionsprozess wird weiterhin durch die elektromagnetische Resonanzfähigkeit des mit supraleitenden Ultradichten Wasserstoff versehenen Zellen verbessert. Höhere Nah- und Überlagerungsformen stehender Elektromagnetische Wellen können hierbei sowohl die Bildung von Ultradichten Wasserstoff als auch den Fusionsprozess fördern.

Ein weiteres Ausführungsbeispiel der erfindungsgemäßen Vorrichtung ermöglicht, dass der molekulare Wasserstoff an der Katalysatorbeschichtung in atomaren Wasserstoff aufgespalten und dadurch zum ultradichten Wasserstoff kondensiert wird. Die kondensierte Form lagert sich im Materialgefüge des Katalysators sowohl des Metallschaums/ oder alternativ des Keramikschaums ein. Hierdurch wird vorab Kondensationsenergie frei.

Gemäß einem weiteren bevorzugten Ausführungsbeispiel der erfindungsgemäßen Vorrichtung ist der ultradichte Wasserstoff in der Katalysatorbeschichtung bindbar. Durch diese Maßnahme wird die Katalysatorbeschichtung nicht nur die katalytische Wirkung erfüllen, sondern auch den kondensierten ultradichten Wasserstoff aufnehmen und binden. Vorzugsweise kann der ultradichte Wasserstoff auch in den Metallschaum oder Keramikschaum eingelagert werden. Nicht jedes Materialgitter kann mit großen Mengen von Wasserstoff "geladen" werden. Hierbei können insbesondere kubisch zentrierte Gitter mit einem oder mehreren Sauerstoffatomen bevorzugt werden. Der Sauerstoff kann somit aus dem Gitter wandern und Platz für den ultradichten Wasserstoff schaffen. Die Materialien der Vorrichtung weisen vorzugsweise "alpha"-Gitterstrukturen (kubisch oder anders raumzentriert) auf.

Bei einem weiteren Ausführungsbeispiel der erfindungsgemäßen Vorrichtung weist die Katalysatorbeschichtung ein Titan-Oxid auf. Dieses Material wird bereits in großen Mengen industriell als Pulver hergestellt und ist somit leicht erhältlich.

Gemäß einem Ausführungsbeispiel der erfindungsgemäßen Vorrichtung ist die Oberfläche des zumindest einen Hohlraums durch den kondensierten ultradichten Wasserstoff beschichtbar. Hierdurch werden die Hohlraumwände mit supraleitfähigem Kondensat aus ultradichten Wasserstoff verspiegelt, um eine hohe Güte für elektromagnetische Hohlraumresonanzen zu erhalten. Somit entsteht ein nahezu ungedämpfter elektromagnetischer Resonanzzustand zwischen dem Hohlraum und dem darin befindlichen ultradichten Wasserstoff. Es ergeben sich reversible thermodynamische Prozesse, die den Verlauf einer Fusion positiv beeinflussen.

Bei einem Ausführungsbeispiel der erfindungsgemäßen Vorrichtung werden zur Bildung von ultradichtem Wasserstoff unter hohen Drücken weitere Metalle zum Katalysator hinzugefügt. Der Druck bezieht sich hierbei auf den effektiven Betriebsdruck von unter 0,1bar. Durch die Hinzugabe von Metallen wird eine Hydridbildung zumindest eingeschränkt. Dies ist ein parasitärer Vorgang aufgrund der katalytischen Wirkung der Vorrichtung.

Sonstige vorteilhafte Ausführungsbeispiele sind Gegenstand weiterer Unteransprüche.

Im Folgenden wird anhand von stark vereinfachten schematischen Darstellungen ein bevorzugtes Ausführungsbeispiel der Erfindung näher erläutert. Es zeigen:
- Figur 1: einen Schnitt durch ein Ausführungsbeispiels der erfindungsgemäßen Vorrichtung,
- Figur 2: eine vergrößerte Ansicht des Abschnitts A aus Figur 1,
- Figur 3: eine vergrößerte Ansicht des Abschnitts B aus Figur 2,
- Figur 4: eine schematische Darstellung eines Aufladevorgangs gemäß dem erfindungsgemäßen Verfahren, und
- Figur 5: eine schematische Darstellung eines Fusionsprozesses gemäß dem erfindungsgemäßen Verfahren.

In der Zeichnung weisen dieselben konstruktiven Elemente jeweils dieselbe Bezugsziffer auf.

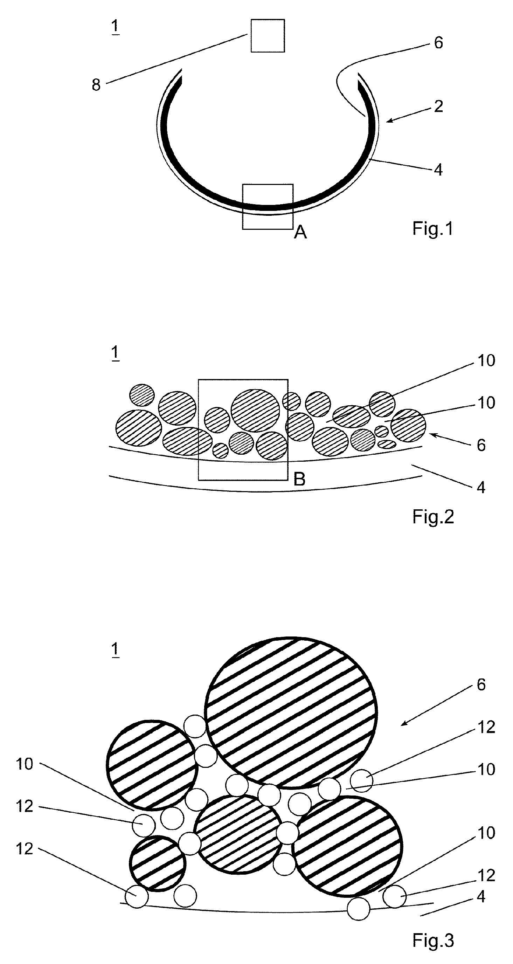

Die Figur 1 zeigt einen Schnitt durch ein Ausführungsbeispiel der erfindungsgemäßen Vorrichtung 1 zum Durchführen des erfindungsgemäßen Verfahrens zum Erzeugen und zum Fusionieren von ultradichtem Wasserstoff.

Die Vorrichtung 1 gemäß dem Ausführungsbeispiel besteht aus einem stellenweise offenen Hohlraum 2 zum Aufnehmen eines Gases. Das Gas ist hierbei vorzugsweise ein mit Unterdruck beaufschlagtes Wasserstoffgas in seiner molekularen Form, welches sofort im Hohlraum 2 zu einem atomaren Plasma umgewandelt wird.

Der Hohlraum 2 ist eine Pore eines ofenporigen Metallschaums oder Keramikschaums 4. Das Material des Metallschaums oder Kermaikschaums 4 soll dabei so gewählt sein, dass selbst unter Abgabe einer möglichst hohen Energie während einer Fusion das Material nicht seinen alpha-Gitterzustand ändert, oder wenn dieser geändert wird, dass wieder der alpha-Gitterzustand erreicht wird.

Die Pore des Metallschaums 4 ist gemäß dem Ausführungsbeispiel zumindest teilweise innenseitig mit einer Katalysatorbeschichtung 6 versehenen. Die Katalysatorbeschichtung 6 weist dabei eine körnige Struktur auf und beinhaltet gemäß dem Ausführungsbeispiel Titan Oxid. Die Katalysatorbeschichtung kann auch aus Fe2O3, Ni, MnO und andere Materialien, die als dünne gestört regelmäßige Gitterstruktur mit Schichtdicke von 10nm bis 4µm auf den Metallschaum oder den Keramikschaum aufgetragen werden können, aufgebaut sein.

Weiterhin weist die Vorrichtung 1 eine Initiierungsquelle 8 auf, die in einem Hohlraum 2 einen Fusionsprozess auslösen kann. Gemäß dem gezeigten Ausführungsbeispiel ist die Initiierungsquelle 8 eine monochromatische, kohärente Lichtquelle 8, der den Hohlraum 2 mit elektromagnetischer Strahlung beaufschlagen kann. Die Initiierung erfolgt durch die Wärmestrahlung der Hohlraumwände, wobei durch Resonanzeffekte mit den nun durch den superflüssigen Wasserstoff verspiegelten Wänden, bevorzugte Wellenlängen bzw. Frequenzen mit hoher Feldstärkeintensität auftreten. Das repulsive Potential zwischen Protonen ist sehr hoch. Die Protonen sind die Kerne des Wasserstoffs. Sie erfahren ihre Abstoßung durch ihre positive Ladung (Coulomb Abstoßung). Im Ultradichten Wasserstoff sind die Kerne sehr dicht gepackt und damit sich sehr nahe. Das abstoßende Potential der Kerne wird hier gemindert, durch die kugelförmige Ausdehnung der Ladungs- und Materiewolke des Protons. Weiterhin wird diese Abstoßung durch andere Kräfte, wie starke Wechselwirkung, schwache Wechselwirkung und Gravitiation sehr stark gemindert. Wenn ultradichter Wasserstoff 12 geformt ist, ist die Dichte ebenfalls sehr hoch und die Fusionspartner, hier Wasserstoffatome 12, sind somit nahe der Fusionsbarriere. Bereits ein kleiner Energiebeitrag reicht demnach aus eine Fusion zu induzieren. Solch eine Zündung des Fusionsprozesses wird gemäß dem Ausführungsbeispiel entweder durch einen Laser 8 oder durch die natürliche Schwarzkörper-Strahlung des Hohlraums 2 ausgeführt, kann aber auch durch externe Ionisierung beispielsweise durch Hochspannung erfolgen. Alternativ kann auch eine simple Zündkerze als Initiierungsquelle 8 hierfür verwendet werden.

Die Figur 2 stellt eine vergrößerte Ansicht des Abschnitts A aus Figur 1 dar. Insbesondere wird hierbei die körnige Struktur der Katalysatorbeschichtung 6 verdeutlicht. Hierdurch wird eine Casimir-Geometrie geschaffen mit einer Vielzahl an Kavitäten 10, die Kapillar- und/oder Casimir-Kräfte auf Materie ausüben. Somit können auch entsprechende Kräfte auf einen in den Hohlraum 2 eingeleiteten molekularen Wasserstoff wirken. Weiterhin ist für solche Strukturen der "Purcell Effekt" bekannt, welcher elektromagnetische Vorgänge um ein vielfaches verstärkt.

Eine weitere Vergrößerung der Struktur aus dem Ausführungsbeispiels der erfindungsgemäßen Vorrichtung 1 des Ausschnitts B aus Figur 2 zeigt die Figur 3. Hierbei wird verdeutlicht, dass die körnige Struktur der Katalysatorbeschichtung 6 molekularen Wasserstoff in atomaren Wasserstoff spaltet und dieser anschließend in ultradichten Wasserstoff 12 kondensiert in den Kavitäten 10 bzw. den Casimir Geometrien 10. Dies entspricht einem aufgeladenen Zustand der Vorrichtung 1.

Im Folgenden wird das erfindungsgemäße Verfahren zum Erzeugen und zum Fusionieren von ultradichtem Wasserstoff erläutert.

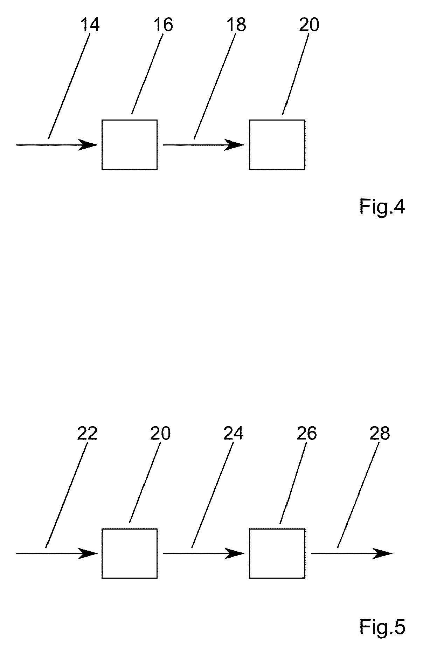

Die Figur 4 zeigt eine schematische Darstellung eines Aufladevorgangs der Vorrichtung 1 gemäß dem erfindungsgemäßen Verfahren. Dabei wird in den Hohlraum 2 ein Gas hineingeleitet (Bezugsziffer 14), welches katalysiert und kondensiert werden soll. Das Gas ist gemäß dem Ausführungsbeispiel molekularer Wasserstoff.

Durch den Kontakt des Wasserstoffgases mit der Katalysatorbeschichtung 6 wird die benötigte Energie für eine Plasmabildung und auch für eine Kondensat-Bildung soweit herabgesetzt (Bezugsziffer 16), dass diese unter Raumtemperatur und noch tieferen Temperaturen spontan erfolgen kann. Das Kondensat ist gemäß dem Ausführungsbeispiel atomarer Wasserstoff, der katalytisch gespalten wurde. Anschließend kondensiert (Bezugsziffer 20) der atomare Wasserstoff in der Casimir Geometrie und lagert sich in der Katalysatorbeschichtung 6 ein und liegt somit in kondensierter Form als ultradichter Wasserstoff 12 vor.

In Figur 5 ist ein möglicher Fusionsprozess gemäß dem erfindungsgemäßen Verfahren dargestellt. Es wird von einer beispielsweise gemäß Figur 4 aufgeladenen Vorrichtung 1 ausgegangen. Durch eine Initiierungsquelle 8 wird der eingelagerte (Bezugsziffer 20) kondensierte ultradichte Wasserstoff 12 energetisch angeregt. Der kondensierte Wasserstoff bildet Cluster 12. Diese liegen stark gestaucht beieinander und zwischen den schweren Katalysatorpartikeln 7. Die Protonen des Wasserstoffs sind sehr dicht gepackt - wobei die Packungsdichte sich aus dem quantenmechanischen Zustand der bindenden Elektronen im Zusammenwirken mit den Protonen ergibt. Das Nahfeld der Katalysatorpartikel 7 unterstützt die Kondensation. Die Packungsdichte der Protonen liegt innerhalb der kritischen Dichte für die Penetration der Fusionsbarriere. Der Energiebeitrag 22 aus der Initiierungsquelle 8 induziert somit einen Fusionsprozess 24 des ultradichten Wasserstoffs. Durch den Fusionsprozess 24 entsteht insbesondere Helium, welches sich aus der Katalysatorbeschichtung 6 verflüchtigen kann. Neben dem Helium entsteht Reaktionsenergie 26 in Form von Wärme. Diese Reaktionsenergie 26 wird anschließend über den Metallschaum/Keramikschaum 4 mittels Wärmeleitung und an deren Oberfläche mittels Wärmestrahlung aus der Vorrichtung 1 hinausgeleitet (Bezugsziffer 28) oder in benachbarte Bereiche der Vorrichtung weitergeleitet. Die Reaktionsenergie 26 kann somit beispielsweise zur Zündung von Fusionen in benachbarten Vorrichtungen genutzt werden. Weiterhin kann die Reaktionsenergie, insbesondere Reaktionswärme, auch konventionell in mechanische, chemische oder elektrische Energie gewandelt und genutzt werden.

Offenbart ist ein Verfahren zum Erzeugen 18 und zum Fusionieren 24 von ultradichtem Wasserstoff 12, bei dem molekularer Wasserstoff in zumindest einem Hohlraum 2 hineingeleitet 14 und katalysiert 16 wird, wobei eine Kondensation 18 des molekularen Wasserstoffs an einem Katalysator 6 des Hohlraums 2 zu einem ultradichten Wasserstoff eingeleitet wird, der ultradichten Wasserstoffs 12 mit Unterdruck oder elektromagnetischer Strahlung zum Einleiten 22 einer Fusion 24 des ultradichten Wasserstoffs 12 in dem zumindest einem Hohlraum 2 beaufschlagt wird und die Reaktionswärme 26 aus dem zumindest einem Hohlraum 2 hinausgeleitet wird. Weiterhin ist eine Vorrichtung 1 zum durchführen des Verfahrens offenbart.

### Bezugszeichenliste

- 1: Vorrichtung
- 2: Hohlraum
- 4: Metallschaum
- 6: Katalysatorbeschichtung
- 7: Katalysatorpartikel der Katalysatorbeschichtung
- 8: Initiierungsquelle / Laser
- 10: Kavität / Casimir Geometrie
- 12: eingelagerte ultradichte Wasserstoff

- 14: Einleitung eines Fluids
- 16: Katalyse
- 18: Kondensation
- 20: Einlagerung

- 22: Initiierungsenergie
- 24: Fusionsprozess
- 26: Reaktionsenergie
- 28: Hinausleiten der Reaktionsenergie

## Patentansprüche

1. Verfahren zum Erzeugen und zum Fusionieren von ultradichtem Wasserstoff, bei dem molekularer Wasserstoff in zumindest einem Hohlraum hineingeleitet und katalysiert wird, **gekennzeichnet durch** die folgenden Schritte:
Einleiten einer Kondensation des molekularen Wasserstoffs an einem Katalysator des Hohlraums zu einem ultradichten Wasserstoff,
Einleiten einer Fusion des ultradichten Wasserstoffs in dem zumindest einem Hohlraum,
Hinausleiten einer Reaktionswärme aus dem zumindest einem Hohlraum.

2. Verfahren nach Anspruch 1, wobei molekularer Wasserstoff nach dem Kondensieren zum ultradichten Wasserstoff gebunden wird.

3. Verfahren nach einem der Ansprüche 1 oder 2, wobei die Fusion elektrisch, elektromagnetisch oder mechanisch eingeleitet wird.

4. Verfahren nach einem der Ansprüche 1 bis 3, wobei die aus dem zumindest einem Hohlraum hinausgeleitete Reaktionswärme zum weiteren Initiieren von Fusionen genutzt wird.

5. Verfahren nach einem der Ansprüche 1 bis 4, wobei die aus dem zumindest einen Hohlraum hinausgeleitete Reaktionswärme in mechanische, elektrische oder chemische Energie umgewandelt wird.

6. Vorrichtung zum Durchführen des Verfahrens nach einem der Ansprüche 1 bis 5, mit zumindest einem Hohlraum zum Aufnehmen eines molekularen Wasserstoffs, mit einem Katalysator zum Katalysieren des molekularen Wasserstoffs und mit einer Initiierungsquelle zum Initiieren einer Fusion, **dadurch gekennzeichnet, dass** der zumindest eine Hohlraum zumindest eine Pore oder Fehlstelle eines metallischen oder keramischen Schaums ist, die an ihren Oberflächen zumindest bereichsweise von dem Katalysator umgeben ist und eine zumindest teilweise Durchlässigkeit für elektromagnetischen Wellen aufweist.

7. Vorrichtung nach Anspruch 6, wobei der Katalysator die Form einer Katalysatorbeschichtung aufweist.

8. Vorrichtung nach den Ansprüchen 6 oder 7, wobei die Katalysatorbeschichtung eine körnige Struktur aufweist.

9. Vorrichtung nach Anspruch 6 oder 7, wobei der molekulare Wasserstoff an der Katalysatorbeschichtung kondensierbar ist zu ultradichtem Wasserstoff.

10. Vorrichtung nach einem der Ansprüche 6 bis 8, wobei ultradichter Wasserstoff in der Katalysatorbeschichtung bindbar ist.

11. Vorrichtung nach einem der Ansprüche 6 bis 9, wobei die Katalysatorbeschichtung ein Titan-Oxid aufweist.

12. Vorrichtung nach einem der Ansprüche 6 bis 11, wobei die Oberfläche des zumindest einen Hohlraums durch den kondensierten ultradichten Wasserstoff beschichtbar ist.

13. Vorrichtung nach einem der Ansprüche 6 bis 12, wobei zur Bildung von ultradichtem Wasserstoff unter hohen Drücken weitere Metalle zum Katalysator hinzugefügt werden.
